# EUROPÄISCHE PATENTSCHRIFT

(11) **EP 0 641 678 B1**
(45) Veröffentlichungstag und Bekanntmachung des Hinweises auf die Patenterteilung: **07.05.1997**
(21) Anmeldenummer: 94113966.9
(22) Anmeldetag: 06.09.1994
(51) Int. Cl.: B60B 7/14, B60B 7/00

(54) **Design-Abdeckscheibe für Scheibenräder**
Design-cover for disk wheels
Conception d'enjoliveur pour roues à disque

(30) Priorität: 07.09.1993 DE 4330276
(43) Veröffentlichungstag der Anmeldung: 08.03.1995
(73) Patentinhaber: ATS Leichtmetallräder GmbH, 67098 Bad Dürkheim (DE)
(72) Erfinder: Maiworm, Friedhelm, D 58791 Werdohl (DE)
(74) Vertreter: Preissner, Nicolaus, Dipl.-Ing.

(56) Entgegenhaltungen:
- EP-A- 0 475 915
- US-A- 1 510 048
- US-A- 3 554 536
- US-A- 4 725 100
- PATENT ABSTRACTS OF JAPAN vol. 8, no. 203 (M-326) 18. September 1984 & JP-A-59 092 201 (YAMAHA HATSUDOKI KK)

## Beschreibung

Die Erfindung betrifft eine Design-Abdeckscheibe für Scheibenräder, die die Speichenbereiche und Ausnehmungen des Scheibenrades vollständig überdeckt. Eine derartige Design-Abdeckscheibe ist in der EP-A-0 475 915 beschrieben.

Oftmals ist es erwünscht, die Scheibenräder von Personenkraftwagen und insbesondere solche aus Leichtmetall mit speichenartigen Verstrebungen und dazwischenliegenden Ausnehmungen vollständig mit einer Scheibe zu überdecken, wobei diese Scheibe auf ihrer Außenseite grafische Ausgestaltungen oder profilierte Prägungen aufweisen kann.

Schwierigkeiten bestehen jedoch bei der Befestigung einer solchen Scheibe auf dem Scheibenrad, die insbesondere keine vorstehenden Schrauben aufweisen und die insbesondere schnell und einfach befestigt werden sollen.

Der vorliegenden Erfindung liegt daher die Aufgabe zugrunde, eine solche Design-Abdeckscheibe zu schaffen, die so ausgestaltet ist, daß sie sehr einfach auf dem Scheibenrad befestigt und wieder gelöst werden kann.

Zur Lösung dieser Aufgabe ist es erfindungsgemäß vorgesehen, daß die kreisscheibenförmige Abdeckscheibe an ihrem Umfang in gleichmäßigen Abständen abragende Stege aufweist, die von angenähert halbkreisförmigen Klemmscheiben überdeckt und in entsprechenden Gewindebohrungen des Scheibenrades mittels Schrauben verspannt sind.

Damit ist eine sehr flachbauende Befestigung derartiger Abdeckscheiben ohne wesentlich vorstehende Teile geschaffen.

Zweckmäßig ist es, wenn die abragenden Stege halbkreisförmige Ausnehmungen mindestens entsprechend dem Durchmesser der Gewindebohrungen aufweisen.

Die Klemmscheiben sollten eine zentrale, mit der jeweiligen Gewindebohrung fluchtende Bohrung aufweisen, deren Umgebungsbereich schräg nach innen eingezogen ist und in die halbkreisförmigen Ausnehmungen der Stege der Abdeckscheibe eingreift. Mit einer solchen Ausgestaltung können auch die Befestigungsschrauben bündig mit der Oberfläche der Klemmscheiben abschließen.

Ferner ist es zweckmäßig, wenn die Abdeckscheibe flach gewölbt ausgeführt und die Stege im an den Abdeckscheiben-Umfang angrenzenden Bereich parallel zur Abdeckscheibe stufenförmig abgekantet sind, wo sie dann von den Klemmscheiben überdeckt werden.

Die Klemmscheiben weisen zweckmäßigerweise auf ihrem halbkreisförmigen Umfang einen um 90° umgebördelten Rand auf, der nach Anziehen der Schrauben sich auf der Außenfläche des Scheibenrades abstützt.

Ebenso sollte der Rand der Abdeckscheibe im Umfangsbereich zwischen den abragenden Stegen um 90° nach hinten umgebördelt sein.

Zur klapperfreien Halterung der Abdeckscheibe ist es ferner zweckmäßig, wenn zwischen den abgekanteten Stegen und dem Scheibenrad ein Gummipuffer eingefügt ist.

Die Abdeckscheiben selbst können eine profilierte Prägung eines Oberflächenmusters aufweisen oder mit einer grafischen , farbigen Gestaltung versehen sein.

Anhand einer schematischen Zeichnung sind Aufbau und Funktionsweise eines Ausführungsbeispiels nach der Erfindung näher erläutert. Dabei zeigen:
- Fig. 1: eine Aufsicht auf ein herkömmliches Scheibenrad;
- Fig. 2: eine Design-Abdeckscheibe in Aufsicht;
- Fig. 3: einen Querschnitt durch eine solche Abdeckscheibe entsprechend der Schnittlinie III-III nach Fig. 2;
- Fig. 4: einen vergrößerten Detailausschnitt im Bereich der von der Abdeckscheibe abragenden Stege;
- Fig. 5: einen Querschnitt entsprechend der Schnittlinie V-V nach Fig. 4 und
- Fig. 6: eine Ansicht auf ein Scheibenrad mit einer möglichen Profilierung einer solchen Abdeckscheibe.

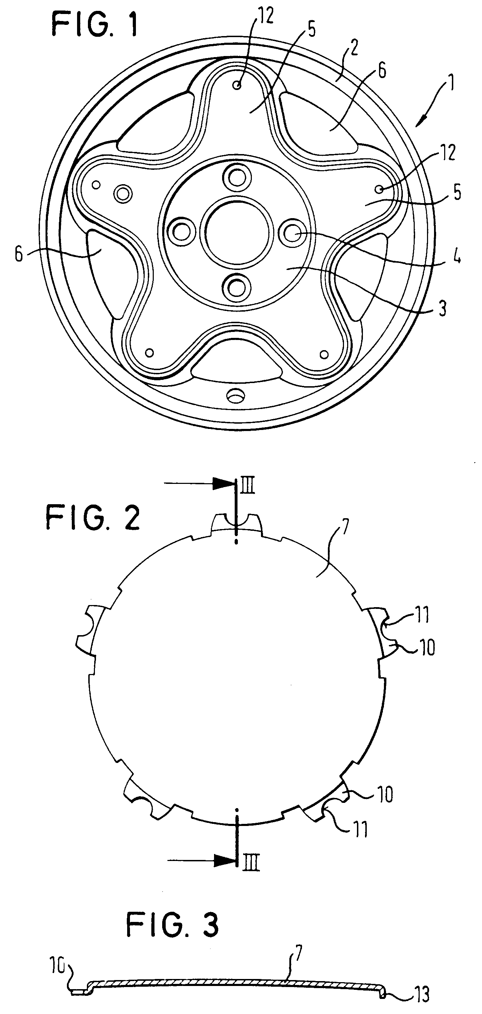

Fig. 1 zeigt eine Ansicht auf ein mögliches Ausführungsbeispiel eines Scheibenrades 1, das einen umlaufenden Bereich 2 im Bereich der Felge und der Felgenhörner aufweist und das zur zentralen Befestigungsplatte 3 mit den Bohrungslöchern 4 zur Befestigung des Scheibenrades 1 an der Radanlagefläche hin speichenförmige Verbindungsbereiche 5 mit dazwischenliegenden Ausnehmungen 6 aufweist.

Dieses Scheibenrad 1 soll nun den Bereich der Speichen 5 und der Ausnehmungen 6 überdeckend mit einer Design-Abdeckplatte 7 versehen werden, wie sie in Aufsicht in Fig. 2 und dem Querschnitt in Fig. 3 dargestellt ist.

Diese Abdeckscheibe 7 weist im Bereich der Speichen 5 des Scheibenrades 1 stegförmige Ansätze 10 auf, die jeweils eine halbkreisförmige Ausnehmung 11 aufweisen, die mit den entsprechenden Gewindebohrungen 12 im Scheibenrad 1 fluchten.

Wie man aus dem Querschnitt nach Fig. 3 ersieht, ist die Abdeckscheibe 7 flach gewölbt ausgeführt, wobei sie im Bereich zwischen den Ansätzen 10 einen um 90° nach unten umgebördelten Rand 13 aufweist, während die Ansätze 10 parallel zur Abdeckscheibe 7 abgekantet sind.

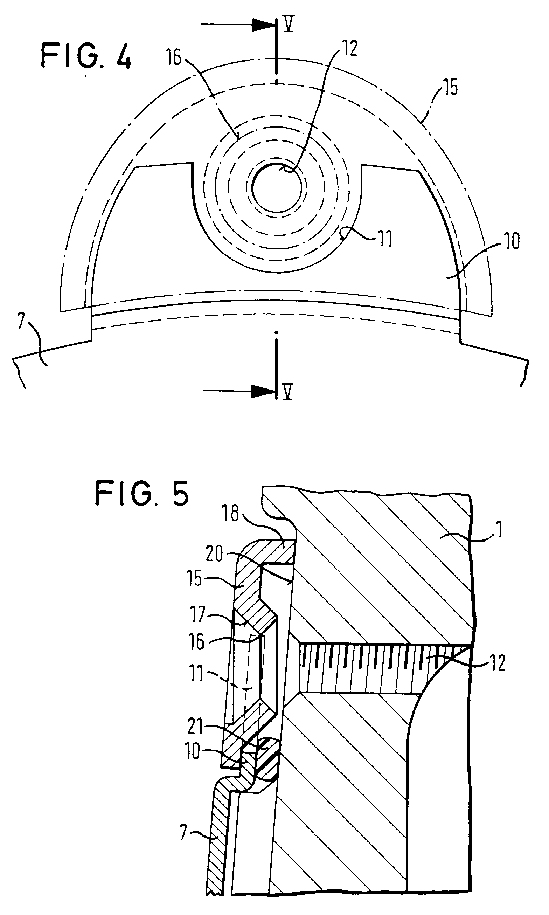

Im einzelnen ist die Befestigung der Abdeckscheibe 7 in Aufsicht und im Querschnitt in den Fig. 4 und 5 dargestellt.

Wie man aus Fig. 4 ersieht, umgibt der Ansatz 10 der Abdeckscheibe 7 die Gewindebohrung 12 im Scheibenrad 1 mit seiner halbkreisförmigen Ausnehmung 11.

Wie man insbesondere aus Fig. 5 ersieht, sind die Ansätze 10 der Abdeckscheibe 7 von einer angenähert halbkreisförmigen Klemmplatte 15 überdeckt, die in der Aufsicht nach Fig. 4 strichpunktiert dargestellt ist. Diese Klemmplatte 15 weist eine zentrale Bohrung 16 auf, die mit der Bohrung 12 im Scheibenrad 1 fluchtet, wobei der Umgebungsbereich 17 der Bohrung 16 schräg nach innen eingezogen ist und damit in die halbkreisförmige Ausnehmung 11 des Ansatzes 10 eingreift und diesen damit auch in Umfangsrichtung positioniert.

Wenn nun durch die Bohrung 16 eine nicht näher dargestellte Schraube in die Gewindebohrung 12 eingeschraubt wird, preßt die Klemmplatte 15 den Ansatz 10 der Abdeckscheibe 7 in Richtung zum Scheibenrad 1 und zwar so lange, bis der umgebördelte Rand 18 der Klemmplatte 15 auf der entsprechenden Ausnehmung 20 des Scheibenrades 1 aufsitzt.

Zur zusätzlichen Verspannung der Abdeckscheibe 7 und zur möglichen Vermeidung von Klappergeräuschen bei nicht ausreichender Verspannung durch die Klemmplatte 15 ist zwischen dem Ansatz 10 und der Ausnehmung 20 des Scheibenrades 1 noch ein Gummipuffer 21 eingeklemmt, der auch durch die Abdeckplatte 15 zusätzlich verspannt wird.

Durch die eingezogenen Umgebungsbereiche 17 der Klemmplatten 15 ist es möglich, eine Senkschraube zu verwenden, so daß damit die Abdeckscheibe 7 einschließlich der Klemmplatten 15 und der Senkschrauben eine fluchtende, glatte Oberfläche bildet, ohne daß irgendwelche Teile vorstehen.

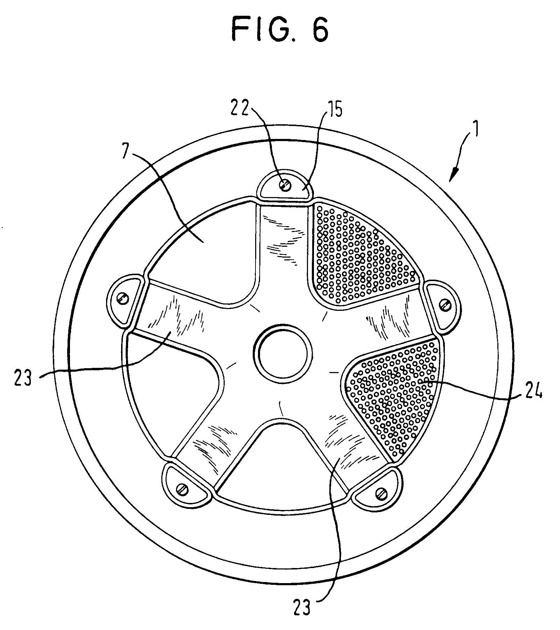

In Fig. 6 ist eine mögliche Ausgestaltung einer solchen Abdeckplatte 7 dargestellt.

Auf dem Scheibenrad 1 ist über die Klemmplatten 15 und eine entsprechende Verschraubung 22 die Abdeckscheibe 7 festgelegt. Nach dem dargestellten Ausführungsbeispiel weist diese Abdeckscheibe 7 beispielsweise rippenförmige Auswölbungen 23 entsprechend der darunterliegenden Speichenlage auf. Die Sektoren zwischen diesen einzelnen Aufwölbungen 23 können dabei - wie im Feld 24 gezeigt - gelocht sein oder glatt ausgebildet, wie in den drei linken Sektoren.

Es ist aber auch möglich, eine glatte Abdeckscheibe 7 zu verwenden, die dann jedoch mit grafischen Mustern in Farbe versehen sein kann.

Insgesamt ergibt sich also eine Abdeckscheibe, die sehr einfach und sicher befestigt werden kann und die eine große Gestaltungsmöglichkeit für aufzubringende Designs aufweist.

## Patentansprüche

1. Design-Abdeckscheibe für Scheibenräder, die die Speichenbereiche und Ausnehmungen des Scheibenrades vollständig überdeckt, dadurch gekennzeichnet, daß die kreisscheibenförmige Abdeckscheibe (7) an ihrem Umfang in gleichmäßigen Abständen abragende Ansätze (10) aufweist, die von angenähert halbkreisförmigen Klemmplatten (15) überdeckt und in entsprechenden Gewindebohrungen (12) des Scheibenrades (1) mittels Schrauben verspannt sind.

2. Abdeckscheibe nach Anspruch 1, dadurch gekennzeichnet, daß die abragenden Ansätze (10) halbkreisförmige Ausnehmungen (11) von mindestens einem Durchmesser entsprechend dem der Gewindebohrungen (12) aufweisen.

3. Abdeckscheibe nach Anspruch 1 und 2, dadurch gekennzeichnet, daß die Klemmplatten (15) eine zentrale, mit der jeweiligen Gewindebohrung (12) fluchtende Bohrung (16) aufweisen, deren Umgebungsbereich (17) schräg nach innen eingezogen ist und in die halbkreisförmigen Ausnehmungen (11) der Ansätze (10) der Abdeckscheibe (7) eingreift.

4. Abdeckscheibe nach Anspruch 1, dadurch gekennzeichnet, daß die Abdeckscheibe (7) flach gewölbt ausgeführt ist und daß die Ansätze (10) im an den Abdeckscheiben-Umfang angrenzenden Bereich parallel zur Abdeckscheibe (7) stufenförmig abgekantet sind.

5. Abdeckscheibe nach Anspruch 1, dadurch gekennzeichnet, daß die Klemmplatten (15) auf ihrem halbkreisförmigen Umfang einen um 90° umgebördelten Rand (18) aufweisen, der nach Anziehen der Schrauben sich auf der Außenfläche (20) des Scheibenrades (1) abstützt.

6. Abdeckscheibe nach Anspruch 1, dadurch gekennzeichnet, daß der Rand (13) der Abdeckscheibe (7) im Umfangsbereich zwischen den abragenden Ansätzen (10) um 90° nach hinten umgebördelt ist.

7. Abdeckscheibe nach Anspruch 2 und 4, dadurch gekennzeichnet, daß zwischen den abgekanteten Ansätzen (10) und dem Scheibenrad (1) ein Gummipuffer (21) eingefügt ist.

8. Abdeckscheibe nach einem oder mehreren der Ansprüche 1 bis 7, dadurch gekennzeichnet, daß die Abdeckscheibe (7) eine profilierte Prägung (23, 24) eines Oberflächenmusters aufweist.

9. Abdeckscheibe nach einem oder mehreren der Ansprüche 1 bis 7, dadurch gekennzeichnet, daß die Oberfläche der Abdeckscheibe (7) mit einer grafischen, farbigen Gestaltung versehen ist.

## Claims

1. A design-cover for disk wheels which totally covers the spoke regions and cavities of the disk wheel, characterized in that said circular disk-shaped cover (7) comprises raised faces (10) protruding equally spaced from its circumference which are covered by approximately semi-circular clamping plates (15) and are tensioned in corresponding tappings (12) of said disk wheel (1) by means of screws.

2. The cover as set forth in claim 1, characterized in that said protruding raised faces (10) comprise semi-circular recesses (11) having a diameter corresponding to at least that of said tappings (12).

3. The cover as set forth in claim 1 and 2, characterized in that said clamping plates (15) comprise, in aligninment with each tapping (12), a central drilled hole (16) the surrounding region (17) of which is recessed slantingly inwards and engages said semi-circular recesses (11) of said raised faces (10) of the cover (7).

4. The cover as set forth in claim 1, characterized in that said cover (7) is configured dished and in that said raised faces (10) are stepped downwards at the region adjoining the circumference of the cover parallel to said cover (7).

5. The cover as set forth in claim 1, characterized in that said clamping plates (15) comprise on their semi-circular circumference a rim (18) flanged at 90° which following tightening of said screws is supported by the outer surface (20) of said disk-wheel (1).

6. The cover as set forth in claim 1, characterized in that said rim (13) of said cover (7) is flanged 90° to the rear in the circumferential region between said protruding raised faces (10).

7. The cover as set forth in claim 2 and 4, characterized in that between said swept-down raised faces (10) and said disk wheel (1) a rubber buffer (21) is inserted.

8. The cover as set forth in one or more of the claims 1 to 7, characterized in that said cover (7) comprises a profiled embossment (23, 24) of a surface pattern.

9. The cover as set forth in one or more of the claims 1 to 7, characterized in that the surface of said cover (7) is provided with a graphical, colored design.

## Revendications

1. Enjoliveur pour des roues à disques, qui recouvre entièrement les régions des rayons et les évidements de la roue à disque, caractérisé en ce que l'enjoliveur en forme de disque circulaire (7) présente à sa périphérie des talons (10) en saillie à des distances régulières, qui sont recouverts par des plaques de serrage (15) approximativement en forme de demi-cercle et qui sont serrés au moyen de vis dans des perçages taraudés correspondants (12) de la roue à disque (1).

2. Enjoliveur selon la revendication 1, caractérisé en ce que les talons en saillie (10) présentent des évidements en forme de demi-cercle (11) qui ont au moins un diamètre correspondant à celui des perçages taraudés (12).

3. Enjoliveur selon les revendications 1 et 2, caractérisé en ce que les plaques de serrage (15) présentent un perçage central (16) en alignement avec le perçage taraudé respectif (12), dont la région environnante (17) est enfoncée en oblique vers l'intérieur et s'engage dans les évidements en forme de demi-cercle (11) des talons (10) de l'enjoliveur (7).

4. Enjoliveur selon la revendication 1, caractérisé en ce que l'enjoliveur (7) présente un léger bombement, et en ce que les talons (10) sont biseautés en gradins parallèlement à l'enjoliveur (7) dans la région adjacente à la périphérie de l'enjoliveur.

5. Enjoliveur selon la revendication 1, caractérisé en ce que les plaques de serrage (15) présentent à leur périphérie en forme de demi-cercle une bordure (18) repliée de 90° qui s'appuie contre la surface extérieure (20) de la roue à disque (1) après avoir serré les vis.

6. Enjoliveur selon la revendication 1, caractérisé en ce que la bordure (13) de l'enjoliveur (7) est repliée de 90° vers l'arrière dans la région périphérique entre les talons en saillie (10).

7. Enjoliveur selon les revendications 2 et 4, caractérisé en ce qu'il est prévu un tampon en caoutchouc (21) entre les talons biseautés (10) et la roue à disque (1).

8. Enjoliveur selon l'une ou plusieurs des revendications 1 à 7, caractérisé en ce que l'enjoliveur (7) présente une empreinte profilée (23, 24) d'un motif de surface.

9. Enjoliveur selon l'une ou plusieurs des revendications 1 à 7, caractérisé en ce que la surface de l'enjoliveur (7) est pourvue d'un motif graphique en couleurs.
